# EUROPEAN PATENT APPLICATION

(11) **EP 3 075 232 A1**
(43) Date of publication of application: **05.10.2016**
(21) Application number: 16163392.0
(22) Date of filing: 31.03.2016
(51) Int. Cl.: A01G 23/093

(54) **CLEARING DEVICE OPERATED BY WORK MACHINE AND METHOD FOR SILVICULTURAL CLEARING / YOUNG STAND MANAGEMENT AND FOR SOIL PREPARATION**

(30) Priority: 02.04.2015 FI 20155238
(71) Applicant: Kuljetus V H Heikkilä Oy, 98500 Pelkosenniemi (FI)
(72) Inventor: Heikkilä, Vesa, 98500 Pelkosenniemi (FI); Tapio, Arto, 98230 Luusua (FI); Heikkilä, Petri, 98500 Pelkosenniemi (FI); Tapio, Joni, 98230 Luusua (FI)
(74) Representative: Väisänen, Olli Jaakko

(57) **Abstract**

The objective in accordance with the first aspect of the invention is to improve the usability of a clearing device (1) operated by a work machine, and the objective in accordance with the second aspect of the invention is to reduce the need for movement of the work machine during silvicultural measures in an management area that comprises at least two forest compartments.

The clearing device (1) operated by a work machine comprises a body (2), a motor (30) suspended to the body (2), a cutting blade (20) connected to the motor (30) via a gear (40) and rotatable around a centre (26), a blade guard (21) that covers the cutting blade (20) at least partially, and work machine mounting (10). The clearing device (1) operated by a work machine further comprises a digger (55). The digger and cutting blade have been arranged on opposite sides of the work machine mounting (10) with respect to each other.

## Description

### Field of invention

The invention is related to forest management and to equipment used in it, especially to clearing devices operated by a work machine, used in the management of young stands, thickets, coppices and shrubs.

### Technical background

Forest management measures are focused - especially in the growing of even-aged forest - on management areas, which consist of one or more forest compartments. A forest compartment is a part of a forest with uniform habitat, development stage of the tree stand and especially with uniform management history of the tree stand. The size of forest compartments typically ranges from under one hectare to a few hectares. Furthermore, small sub-compartments can be distinguished within a forest compartment, for example on the basis of the small-scale features of the soil or vegetation that differs from the rest of the forest.

Even-aged forest management usually employs especially the following silvicultural measures: clearing of regenerated area where necessary, soil preparation, cultivation or natural regeneration, verification of regeneration result, correction of nutrient imbalance by means of fertilization where necessary, grass control depending on the habitat, early clearing of young stand, inspection of young stand and repair planting where necessary, thinning of young stand, removal of potential hold-overs, intermediate felling (first thinning and thinning) and regeneration felling. Before intermediate felling or regeneration felling, it is sometimes also necessary to carry out pre-clearing. In addition to these, other measures potentially needed are pruning and ditch maintenance. Controlled burning is sometimes performed between the clearing and soil preparation of the regenerated area.

In known clearing devices operated by a work machine, a rotating clearing blade has been fastened to the boom of the work machine, such as an excavator, that operates the clearing device. The energy required by such clearing devices operated by a work machine is usually taken from the work machine (such as an excavator, tractor), for example from the hydraulic system of the work machine. Clearing devices operated by a work machine, used in forest management, are known from US patents 4,899,522 and 6,192,665, Canadian patent 2,066,291, Finnish patent 122904 and Finnish utility model 6261.

Clearing devices operated by a work machine are also known from US patent application publication 2006/283055 and US patents 4,996,830 and 5,329,752.

In forest compartments, clearing devices operated by a work machine can be used for purposes such as the clearing of a regenerated area, thinning of young stand or pre-clearing.

### Objective of invention

Known clearing devices operated by a work machine, used for forest management, are not well applicable to other silvicultural measures such as clearing work / young stand management. This results, among other things, in unnecessary need for movement within the delicate forest area, when the work machine needs to be moved for changing to it devices used for other silvicultural measures.

The objective in accordance with the first aspect of the invention is to improve the usability of a clearing device operated by a work machine. This objective can be solved by means of a clearing device operated by a work machine according to claim 1.

The objective in accordance with the second aspect of the invention is to enable a reduction in the need for movement of the work machine during silvicultural measures in management areas where clearing / young stand management and soil preparation are carried out for forest regeneration purposes (in other words, the measures most advantageously take place in at least two forest compartments). This objective can be solved by means of a method according to the independent claim 14.

The dependent claims describe the advantageous aspects of the clearing device.

### Advantages of invention

A clearing device operated by a work machine comprises a body, a motor fastened to the body, a cutting blade connected to the motor via a gear and rotatable around a centre, a blade guard that covers the cutting blade at least partially, and work machine mounting. Moreover, the clearing device comprises a digger. The digger and cutting blade have been arranged on opposite sides of the work machine mounting with respect to each other.

By means of a clearing device operated by a work machine, it is possible not only to clear a regenerated area, thin out young stand and perform pre-clearing using the cutting blade, but it is also possible to use the digger to perform soil preparation that breaks the top soil (in other words reveals the mineral soil), which is required typically when preparing young stand cultivation or natural forest regeneration for example by screefing or mounding.

By means of an arrangement of a digger and cutting blade of a clearing device operated by a work machine, it is possible to reduce the imbalance of a clearing device operated by a work machine, in which case it is possible to reduce the stresses exerted on the carrying device, such as the boom of an excavator, of the work machine. On the other hand, it is also possible to improve the accuracy of clearing, when the clearing device operated by a work machine is in better balance with respect to the work machine mounting. This is of advantage especially in pre-clearing and young stand management, because in this way it is possible to better avoid damage to trees that are spared and to saplings.

The digger can essentially extend below the rotatable cutting blade. In this case, it is possible to use the digger to keep the rotating cutting blade of the clearing device operated by a work machine mechanically at a sufficient distance from the ground surface during clearing.

When the digger of the clearing device operated by a work machine comprises a number of protruding claws directed to the side, downwards and diagonally downwards, it is easier for the claws to open the ground surface especially in a rocky ground especially when performing revealing soil preparation such as screefing or mounding. Moreover, it is easier for the claws to dig into for example frozen ground than for a flat-ended digger.

When the digger comprises an end plate, which has been fastened to the clearing device operated by a work machine in a detachable manner by means of fastening elements, most advantageously for example by means of hexagonal screws and nuts, it is possible to connect other devices, such as a hydraulically-operated rotator and timber grab device, required by silvicultural measures, to the clearing device operated by a work machine to replace the digger.

When a hydraulically-operated rotator and/or timber grab device has been installed to replace the digger after the detachment of the digger, it is possible to also lift, transfer and stack tree trunks using the clearing device operated by a work machine. This enables the use of the clearing device operated by a work machine as a collecting device. In this way, the clearing device can be used for collecting tree trunks for use for example as energy wood.

When the clearing device operated by a work machine is fastened to a work machine equipped with a boom by means of a connection, and when in the clearing device operated by a work machine a number of claws have been installed - for example essentially diagonally - with respect to the plane formed by the cutting blade so that the neutral axis of the claw runs essentially through the centre of gravity of the connection between the work machine mounting and the boom of the work machine, it is possible to reduce the moments exerted on the work machine mounting, body and digger for example when the work machine is being moved by means of the digger of the clearing device operated by a work machine, by pressing the digger against the ground by means of the boom of the work machine and by turning, rotating, pulling or pushing the boom of the work machine.

When the claws of the clearing device operated by a work machine are at an angle with respect to each other so that the claws are apart from each other, in other words the free end of a claw is farther from the adjacent claw than the fastened end of the claw, it is possible to use the outermost claws as a press tool.

When the motor of the clearing device operated by a work machine is hydraulically operated and where the clearing device operated by a work machine further comprises a stopper of hydraulic supply, for example an electric valve, to prevent the operation of the motor when the stopper is not connected to the electricity supply of the work machine, it is possible to prevent the unauthorised use of the clearing device operated by a work machine. It is possible to use starting prevention implemented in this way for the saw and also for example to prevent the unauthorised use of a hydraulically-operated rotator or timber grab connected alternatively to the clearing device operated by a work machine.

When the clearing device operated by a work machine comprises a GPS locator, preferably one which is configured so that the GPS locator has electricity supply from the work machine to be arranged for the operation of the clearing device operated by a work machine, which electricity supply has most advantageously been arranged via electric wires arranged in connection with hydraulic hoses, it is possible to monitor the work of the clearing device operated by a work machine, the progress of the work and that the clearing device operated by a work machine remains within the correct forest compartment. This monitoring can be done remotely, for example from the office of the forest management foreman. Moreover, it is possible to improve the accuracy of the monitoring as compared to a situation where the GPS locator was only situated in the work machine. The work machine is typically driven along drive tracks which have been arranged for example 10, 20 or 30 m apart from each other. However, the boom may extend to a distance of 10 - 15 m from the drive track, in which case it is possible to go beyond the boundaries of potential agreed management areas or forest compartments.

When the clearing device operated by a work machine further comprises equipment for measuring the operating time of the clearing device operated by a work machine, most advantageously the equipment for measuring the operating time has been placed in a sealed protective casing, it is possible to monitor the need for maintenance and on the other hand, for example when the clearing device operated by a work machine is rented, to monitor the operating hours of the clearing device operated by a work machine, which operating hours can serve as the basis of charges for the renting.

When the clearing device operated by a work machine further comprises a felling iron drawn in with respect to the outer edge of the cutting blade, the distance of which felling iron from the outer edge of the cutting blade most advantageously changes as a function of the angle, it is possible to open the sawing cut so that the sawing cut opens to the direction of the centre of the blade, in which case the friction on the cutting blade is reduced. Moreover, it is possible to direct the felling by means of the felling iron. A felling iron with variable distance can advantageously be used for the felling of tree trunks of varying thicknesses: when the felling iron is close to the edge of the cutting blade, it is possible to cut thin trunks, and when the felling iron is farther from the edge of the cutting blade, it is possible to also cut thicker trunks.

When the work machine mounting of the clearing device operated by a work machine is connected to the clearing device operated by a work machine by means of a number of fastening elements, for example hexagonal screws, it is possible to change the work machine mounting to another work machine mounting or the entire work machine mounting can be transferred to another location on the clearing device. This increases the available uses of the clearing device operated by a work machine, when the same clearing device operated by a work machine can be used in a simple manner on different work machines that have different work machine mounting.

The blade guard of the clearing device operated by a work machine can advantageously comprise a protruding tree selector. In this case, the selection of a sapling/tree to be spared, needed especially in the thinning of planted groups of saplings, among saplings/trees that grow close to each other is facilitated. Most advantageously, the tree selector is claw-like or jaw-like, in which case it is easy to slip it past a sapling/tree to be spared so that the cutting blade can be used for cutting the remaining saplings/trees in the planted group of saplings.

In the method for silvicultural clearing and soil preparation, the cutting blade of the clearing device operated by a work machine and fastened to the work machine is used for clearing / young stand management, and the digger is used for soil preparation. In this way, it is possible to reduce the need for movement of the work machine in the forest area. In this case, it is also possible to improve the efficiency of clearing / young stand management and to reduce the wear of the forest ground surface, when the work machine needs to move for example to the side a forest road on a fewer occasions to change devices needed for other silvicultural measures, to be connected to the work machine.

### List of drawings

In what follows, the embodiments of the clearing device operated by a work machine are presented in more detail by means of the exemplary applications shown in the enclosed drawings FIG 1 - 13. Of the drawings:
- FIG 1: shows a perspective view of the clearing device operated by a work machine viewed diagonally from above from the back;
- FIG 2: shows a perspective view of the clearing device operated by a work machine viewed diagonally from above from the front;
- FIG 3: shows a view of the clearing device operated by a work machine viewed from above;
- FIG 4: shows a view of the clearing device operated by a work machine viewed from below;
- FIG 5: shows a view of the clearing device operated by a work machine viewed from the front;
- FIG 6: shows a view of the clearing device operated by a work machine viewed from the back;
- FIG 7: shows a view of the clearing device operated by a work machine viewed from the side;
- FIG 8: shows a longitudinal section VIII - VIII of the clearing device operated by a work machine shown in FIG 3, equipped with an accessory;
- FIG 9: shows the gear of the clearing device operated by a work machine shown in FIG 8. The body of the gear has been partially removed;
- FIG 10: shows an alternative embodiment of the digger, and tree guide;
- FIG 11 and 13: show details of the embodiment of the digger shown in FIG 10; and
- FIG 12: shows a detail of the embodiment of the tree guide shown in FIG 10.

The same reference numbers refer to the same technical characteristics in all drawings.

### Detailed description of the invention

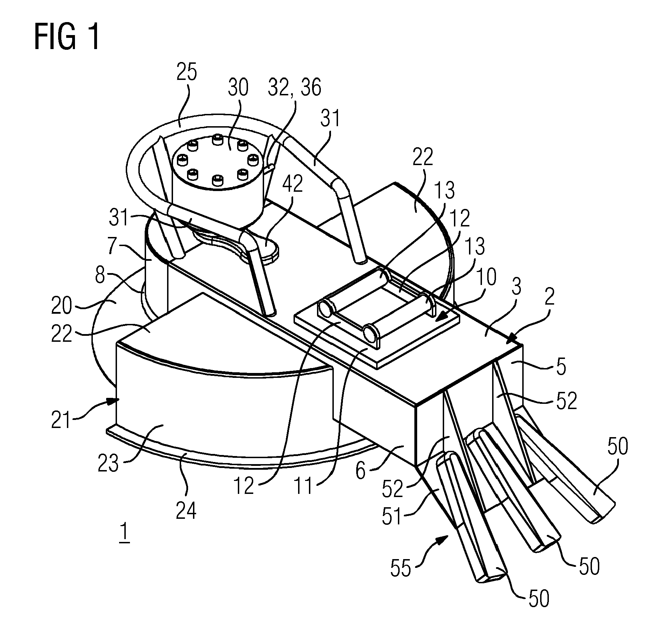

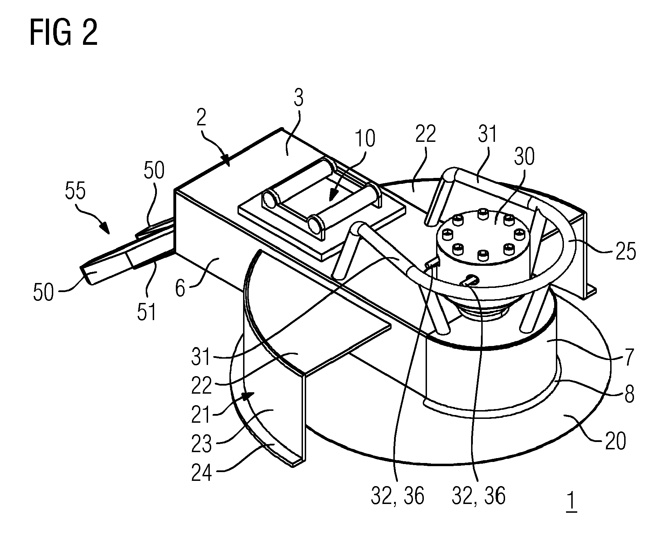

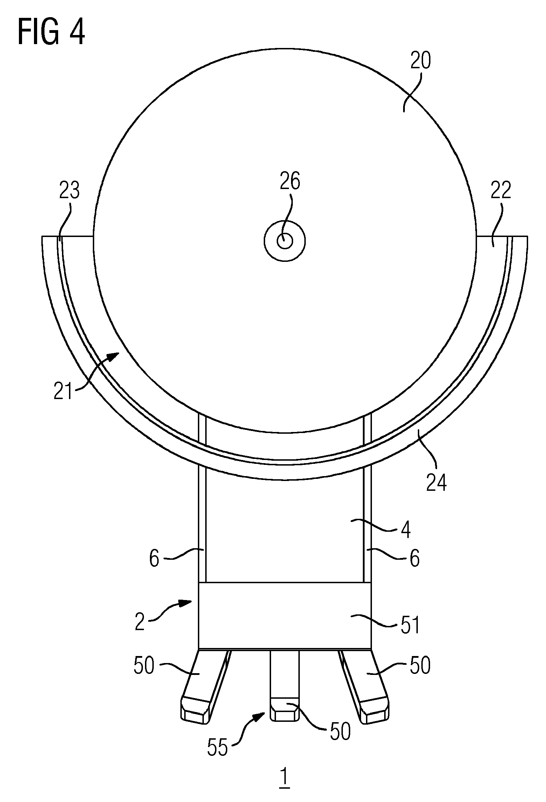

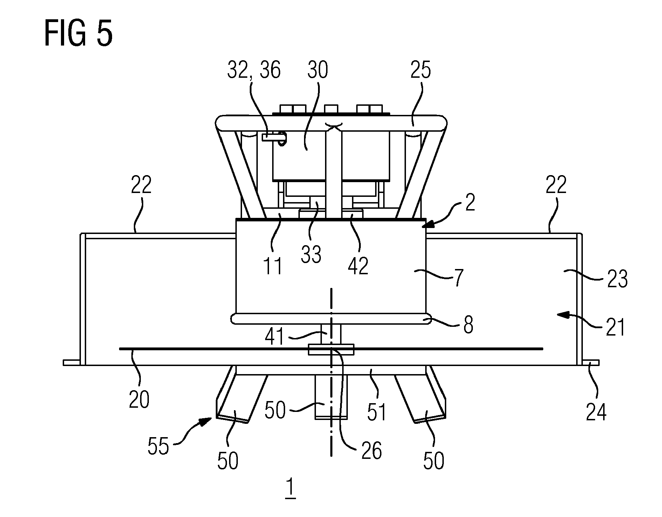

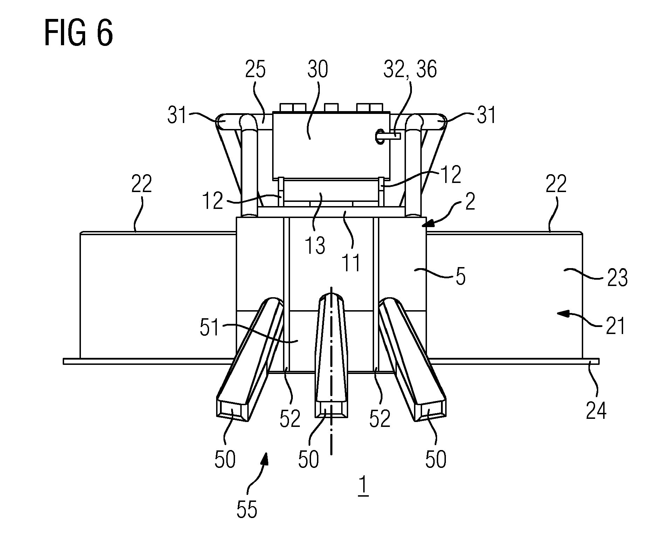

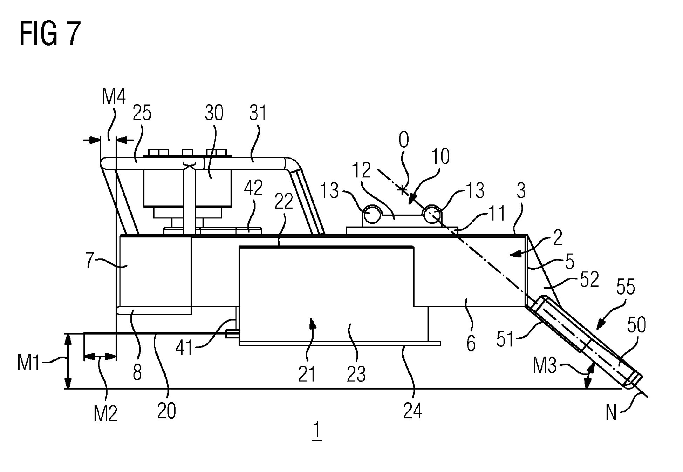

The drawings FIG 1-7 show a clearing device 1 operated by a work machine, which clearing device 1 comprises a body 2, a motor 30, a rotatable cutting blade 20 connected to the motor 30 via a gear 40, a blade guard 21 that covers the cutting blade 20 at least partially, and work machine mounting 10. Moreover, the clearing device 1 operated by a work machine comprises a digger 55 arranged outside the blade guard 21 in the lateral direction, which digger 55 extends essentially below the rotatable cutting blade 20.

The distance M1 between the plane formed by the rotating cutting blade 20 and the lowermost point of the digger 55 can be 50 - 150 mm, most advantageously 100 mm. A stiffener 24 has most preferably been installed on the lower edge of the blade guard 21, to the side of the blade guard 21. The stiffener 24 has most advantageously been made from a plate similar to the plate of the blade guard 21. The stiffener 24, which reinforces the lower edge of the blade guard 21 and aims to keep the blade guard 21 curved, has most preferably been welded to the lower edge of the blade guard 21. The blade guard 21 can extend 20 - 70 mm, most advantageously 40 mm below the cutting blade 20. The diameter D of the cutting blade 20 can be 600 - 1000 mm, most advantageously it is 800 mm. The body 2 comprises at least one side plate 6, front plate 7 and top plate 3. The body 2 can contain a bottom plate 4 or alternatively the bottom of the body 2 can be at least partially open.

The cutting blade 20 is rotatable around its centre 26, and the digger 55 and centre 26 have been arranged on opposite sides of the work machine mounting 10. Most advantageously, the work machine mounting 10 has been configured near the centre of gravity of the clearing device 1 operated by a work machine, between the digger 55 and centre 26. The work machine mounting 10 is most advantageously compatible with S40, S60 and NTP10 mountings. The work machine mounting 10 comprises a plate 11, to which two end plates 12 have been fastened. Two pins 13 have been connected between the end plates 12. The fastenings of the parts of the work machine mounting 10 have most preferably been made by welding. The work machine mounting 10 has most advantageously been connected to the clearing device 1 operated by a work machine by means of a number of fastening elements, for example hexagonal screws. As an example, the work machine mounting 10 can be fastened to the body 2 by means of hexagonal screws that go through the plate 11 of the work machine mounting 10, which hexagonal screws are most preferably tightened into threaded holes made in the top plate 3 of the body 2.

The digger 55 comprises a number of protruding claws 50 directed downwards or diagonally downwards from the digger frame 51 of the digger 55. The claws 50 are most advantageously generally commercially available excavator claws, the length of which can be 300 - 500 mm, most advantageously 400 mm. It is possible to fasten the claws 50 to the digger body 55 for example by means of hexagonal screws, in which case they are easily replaceable, alternatively or in addition to this the claws 50 can be welded to the digger body 55. There are most preferably triangular support plates 51 between the claws 50, with the support plates 51 reinforcing the connection between the digger body 51 and the end plate 5 of the digger 55. The end plate 5 of the digger 55 has been fastened to the clearing device 1 operated by a work machine in a detachable manner most preferably by means of fastening elements, most advantageously for example by means of hexagonal screws and nuts. In this case, it is possible to connect other devices required by silvicultural measures to the clearing device operated by a work machine to replace the digger. After the detachment of the end plate 5 of the digger 55, it is possible to install a hydraulically-operated rotator and/or timber grab device to the body of the clearing device 1.

The angle M3 between the claws 50 and the plane formed by the rotating cutting blade 20 can be 25° - 60°, most advantageously it is 40° or approximately 40°. The claws 50 are at an angle with respect to each other so that the claws 50 are apart from each other, in other words the free end of each claw 50 is farther from the adjacent claw 50 than the fastened end of the claw 50. The angle M5 of the displacement can be 5° - 20°, most advantageously it is 15° or approximately 15°. The claws 50 of the digger 55 stick out from the digger 55, which is an extension to the body 2, most advantageously diagonally outwards to the side of the blade guard 21.

The clearing device 1 operated by a work machine is fastened to a work machine equipped with a boom by means of a connection, where in the clearing device 1 operated by a work machine a number of claws 50 have been installed essentially diagonally with respect to the plane formed by the cutting blade 20 when it is rotating so that the neutral axis N of each claw 50 runs essentially through the centre of gravity O of the connection between the work machine mounting 10 and the boom of the work machine.

The clearing device 1 operated by a work machine most preferably further comprises a felling iron 25 drawn in with respect to the outer edge of the cutting blade 20, the distance of which felling iron 25 from the outer edge of the cutting blade 20 most advantageously changes as a function of the angle. The felling iron 25 has most advantageously been integrated into the motor guard 31, which protects the motor 30 against potential impacts. A stiffener 8 has most advantageously been installed to the lower part of the front plate 7 of the body 2, which stiffener 8 defines the greatest cutting depth M2 of the cutting blade 20, which cutting depth M2 can be 50 - 200 mm, most advantageously 100 mm. The stiffener 8 is most advantageously a round iron, which has most preferably been welded to the front plate 7. The diameter of the stiffener 8 can be 20 - 60 mm, most advantageously 40 mm. The horizontal distance M4 between the front edges of the felling iron 25 and stiffener 8 can be 20 - 100, most advantageously 40 mm.

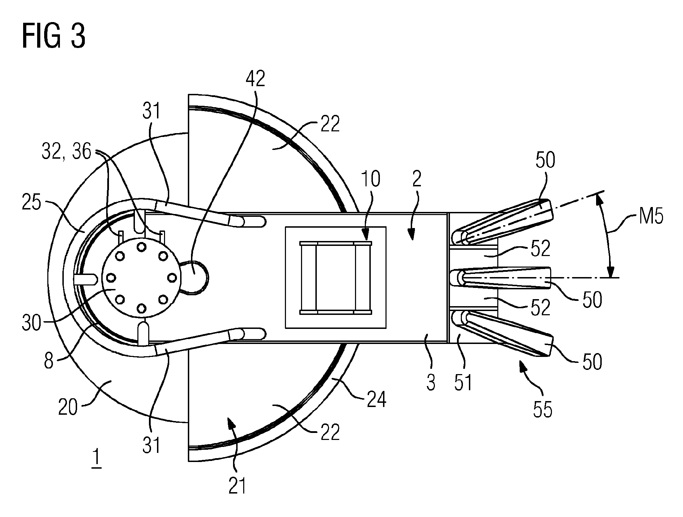

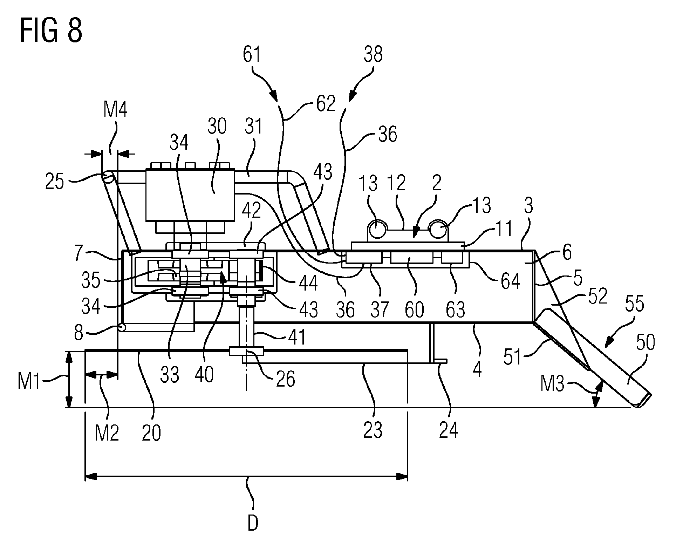

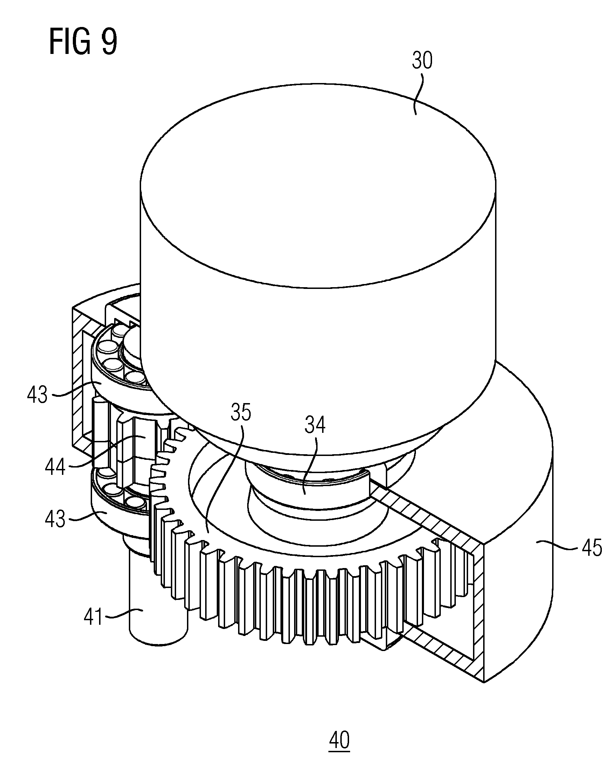

FIG 9 shows the gear 40 of the clearing device 1 operated by a work machine presented in FIG 3 (advantageous location of the gear in the clearing device 1, see e.g. FIG 8), where the body 45 of the gear has been removed partially. The shaft 33 coming from the motor 30, which shaft 33 has been shown in FIG 8, has most advantageously been connected to the gearwheel 35, and the shaft 41 of the cutting blade 20 has most advantageously been connected to the gearwheel 44. The shaft 41 has most preferably been supported on both sides of the gearwheel 44 by means of bearings 43. The bearings 43 are most advantageously cylinder roller bearings. The shaft 33 coming from the motor 30 has most preferably been supported to the body 2 by means of bearings 34, which are most preferably cylinder roller bearings. A guard 42 of the gear 40 is located on top of the top plate 3 of the body 2. The transmission ratio of the gear can be 1 - 10, most advantageously it is 5. The speed of rotation of the cutting blade 20 can be 500 - 1500 rpm, most advantageously 1000 rpm.

FIG 8 shows a clearing device 1 operated by a work machine and equipped with an accessory, in accordance with longitudinal section VIII - VIII (cf. FIG 3).

The clearing device 1 operated by a work machine and equipped with an accessory can comprise a GPS locator 60, preferably one which is configured so that the GPS locator 60 has electricity supply 61 from the work machine to be arranged for the operation of the clearing device 1 operated by a work machine, which electricity supply 61 has most advantageously been arranged via electric wires 62 arranged in connection with hydraulic hoses 36. In this case, the hydraulic hoses 36 and electric wires 62 can be bundled to facilitate handling. The connectors 32 of the motor 30 are most preferably located in the upper part of the motor 30. In addition to or instead of the electricity supply 61, the GPS locator 60 can also have a battery 63, in which case the GPS locator 60 can send location information also when it is disconnected from the work machine.

The starting of the motor 30 of the clearing device 1 operated by a work machine and equipped with an accessory may require the connection of the electricity supply 61 of the work machine to the motor 30 of the clearing device 1 operated by a work machine, most preferably using for example an electric valve 37. The electric valve 37 can be installed most advantageously inside the body 2, most advantageously in the same water-tight and/or sealable protective casing 64 with the GPS locator 60 and battery 63.

The clearing device 1 operated by a work machine can further comprise equipment for measuring the operating time of the clearing device 1 operated by a work machine, most advantageously the equipment for measuring the operating time has been placed in a sealed protective casing 64.

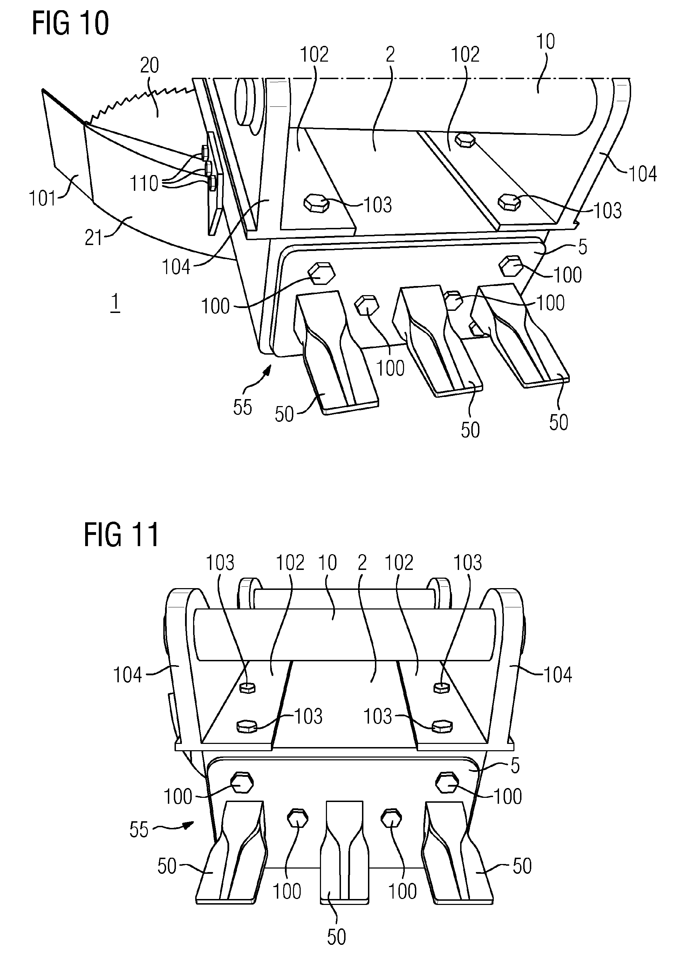

FIG 10 shows an alternative embodiment of the digger 55 and an optional tree guide 101.

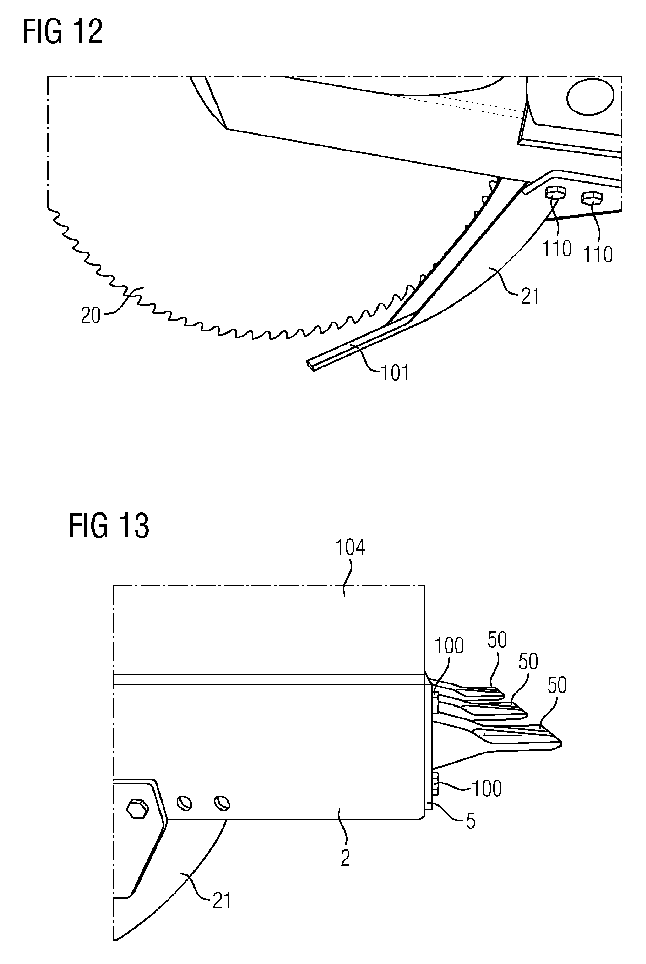

In the alternative embodiment of the digger 55 (cf. also FIG 11 and FIG 13), the end plate 5 is fastened to the body 2 of the clearing device 1 by means of fastening elements 100. The claws 50, which can number one or more even though the drawing indicates that there are three claws, can protrude horizontally, downwards or for example diagonally downwards.

The digger 55 is most advantageously detachable in a simple manner by detaching the fastening elements 100 that hold the end plate 5. After this, a hydraulically-operated rotator and/or timber grab device can be installed to replace the digger 55.

The work machine mounting 10 can most advantageously be fastened in a simple manner to the body 2 of the clearing device 1 by means of fastening elements 103. The work machine mounting 10 used can in practice be any work machine mounting available in the market.

The blade guard 21 can be fastened to the body 2 of the clearing device 1 by means of fastening elements 110. A tree selector 101 (also see FIG 12) can most advantageously be added as an extension to the distal end of the blade guard 21, which tree selector 101 is preferably claw-like or jaw-like. The tree selector 101 can naturally be arranged to a location other than in connection with the blade guard 21; as an example, it can be fastened to the body 2. In practice, however, the entanglement of the tree selector 101 in coppice can be best avoided if the tree selector 101 is specifically in connection with the blade guard 21, especially as an extension to it.

In the method for silvicultural clearing / young stand management and soil preparation, the clearing device 1 operated by a work machine and fastened to the work machine through the work machine mounting 10 is used for clearing / young stand management and soil preparation. The weight of the work machine used in the method can be for example 3.5 - 25 tonnes, which is why the clearing device operated by a work machine in accordance with the present invention is usable in a wide variety of sizes of work machines. In addition to this or as an alternative to this, the clearing device 1 operated by a work machine can be scaled on the basis of the work machine.

The invention should not be understood to be limited only by the below claims, but the invention is to be understood to include all their legal equivalents and the combinations of the embodiments presented.

### List of reference numbers used:

- M1: distance
- M2: cutting depth
- M3: angle
- M4: distance
- M5: angle
- N: neutral axis of claw
- D: diameter
- O: point of intersection
- 1: clearing device
- 2: body
- 3: top plate
- 4: bottom plate
- 5: end plate
- 6: side plate
- 7: front plate
- 8: stiffener
- 10: work machine mounting
- 11: plate
- 12: end plate
- 13: pin
- 20: cutting blade
- 21: blade guard
- 22: top plate
- 23: plate
- 24: stiffener
- 25: felling iron
- 26: centre
- 30: motor
- 31: motor guard
- 32: connectors
- 33: shaft
- 34: bearing
- 35: gearwheel
- 36: hydraulic hose
- 37: electric valve
- 38: hydraulic supply
- 40: gear
- 41: shaft
- 42: guard
- 43: bearing
- 44: gearwheel
- 45: body
- 50: claw
- 51: digger body
- 52: support plate
- 55: digger
- 60: GPS locator
- 61: electricity supply
- 62: electric wire
- 63: battery
- 64: protective casing
- 100: fastening element (e.g. bolt)
- 101: tree selector
- 102: shoulder
- 103: fastening element (e.g. bolt)
- 104: supporting wall
- 110: fastening element (e.g. bolt)

## Claims

1. A clearing device (1) operated by a work machine, which clearing device (1) comprises:
- a body (2);
- a motor (30) fastened to the body (2), and a cutting blade (20) connected to the motor (30) via a gear (40) and rotatable around a centre (26);
- a blade guard (21) that covers the cutting blade (20) at least partially; and
- work machine mounting (10); and
which is **characterised in that:**
- the clearing device (1) operated by a work machine further comprises a digger (55);
- which digger and cutting blade have been arranged on opposite sides of the work machine mounting (10) with respect to each other.

2. A clearing device (1) operated by a work machine according to claim 1, where the digger (55) comprises a number of protruding claws (50) directed to the side, downwards or diagonally downwards.

3. A clearing device (1) operated by a work machine according to any one of the preceding claims 1 or 2, where the digger (55) comprises an end plate (5), which has been fastened to the clearing device (1) operated by a work machine in a detachable manner by means of fastening elements (100), for example by means of hexagonal screws and/or nuts.

4. A clearing device (1) operated by a work machine according to claim 3, where a hydraulically-operated rotator and/or timber grab device has been installed to replace the digger (55) after the detachment of the digger (55).

5. A clearing device (1) operated by a work machine according to any one of the preceding claims, where the clearing device (1) operated by a work machine is fastened to a work machine equipped with a boom by means of a connection, and where in the clearing device (1) operated by a work machine a number of claws (50) have been installed - for example essentially diagonally - with respect to the plane formed by the cutting blade (20) when it is rotating so that the neutral axis (N) of each claw (50) runs essentially through the centre of gravity (O) of the connection between the work machine mounting (10) and the boom of the work machine.

6. A clearing device (1) operated by a work machine according to any one of the preceding claims, where the claws (50) are at an angle with respect to each other so that the claws (50) are apart from each other, in other words the free end of each claw (50) is farther from the adjacent claw (50) than the fastened end of the claw (50).

7. A clearing device (1) operated by a work machine according to any one of the preceding claims, where the motor (30) of the clearing device (1) operated by a work machine is hydraulically operated and where the clearing device (1) operated by a work machine further comprises a stopper of hydraulic supply (38), for example an electric valve (37), to prevent the operation of the motor (30) when the stopper is not connected to the electricity supply (61) of the work machine.

8. A clearing device (1) operated by a work machine according to any one of the preceding claims, where the clearing device (1) operated by a work machine further comprises a GPS locator (60), preferably one which is configured so that the GPS locator (60) has electricity supply (61) from the work machine to be arranged for the operation of the clearing device (1), which electricity supply (61) has most advantageously been arranged via electric wires (62) arranged in connection with hydraulic hoses (36).

9. A clearing device (1) operated by a work machine according to claim 7 or claims 7 and 8, which clearing device (1) operated by a work machine further comprises equipment for measuring the operating time of the clearing device (1) operated by a work machine; most advantageously the equipment for measuring the operating time has been placed in a sealed protective casing (64).

10. A clearing device (1) operated by a work machine according to any one of the preceding claims, where the clearing device (1) operated by a work machine further comprises a felling iron (25) drawn in with respect to the outer edge of the cutting blade (20), the distance of which felling iron (25) from the outer edge of the cutting blade (20) most advantageously changes as a function of the angle.

11. A clearing device (1) operated by a work machine according to any one of the preceding claims, where the work machine mounting (1) has been connected to the clearing device (1) by means of a number of fastening elements, for example hexagonal screws.

12. A clearing device (1) operated by a work machine according to any one of the preceding claims, where the blade guard (21) comprises a protruding tree selector (101).

13. A clearing device (1) operated by a work machine according to claim 12, where the tree selector (101) is claw-like or jaw-like.

14. A method for silvicultural clearing / young stand management and soil preparation, in which method the cutting blade (20) of the clearing device (1) operated by a work machine and fastened to the work machine through the work machine mounting (10) is used for clearing / young stand management and the digger (55) is used for soil preparation, which cutting blade (20) and digger (55) are according to any one of the preceding claims.
